# EUROPEAN PATENT SPECIFICATION

(11) **EP 2 273 167 B1**
(45) Date of publication and mention of the grant of the patent: **17.10.2012**
(21) Application number: 10168492.6
(22) Date of filing: 06.07.2010
(51) Int. Cl.: F16K 31/40

(54) **A normally open solenoid valve and a manufacturing method thereof**
Stromlos offenes Magnetventil und Herstellungsverfahren dafür
Électrovanne normalement ouverte et son procédé de fabrication

(30) Priority: 10.07.2009 CN 200910159358
(43) Date of publication of application: 12.01.2011
(73) Proprietor: Zhejiang Sanhua Climate & Appliance Controls Group Co., Ltd., Zhejiang 312500 (CN)
(72) Inventor: Fu, Songlin, Xinchang County Zhejiang Province 312500 (CN)
(74) Representative: Maiwald Patentanwalts GmbH

(56) References cited:
- CN-Y- 2 619 099
- CN-Y- 2 731 203
- DE-A1- 2 740 646
- US-A- 1 167 815
- US-A- 3 829 060

## Description

### FIELD OF THE INVENTION

The present invention relates to refrigeration control field, especially to a control of pipelines in a refrigeration system such as refrigeration equipment and commercial air conditioner. More specifically, the present invention relates to a solenoid valve which remains closed when being energized.

### DESCRIPTION OF THE RELATED ART

Solenoid valves for opening/closing pipelines are widely used in circuits of refrigeration systems. Solenoid valves are generally opened when being energized. However, a solenoid valve which remains closed when being energized (hereinafter also referred to as "normally open solenoid valve") is adopted in some pipelines to save more energy and become more suitable. There are generally two types of normally open solenoid valves, one type of normally open solenoid valve employs a directly open/closed operating mode and provides a relatively small flowrate, as disclosed in Chinese Utility Model application No. 03231177.X, titled "Normally open DC electromagnetic valve with throtting and voltage reducing"; while the other type of normally open solenoid valve providing a relatively large flowrate employs a pilot-operated mode, i.e., a indirectly open/closed operating mode, as disclosed in Chinese Utility Model application No. 200420108493.2 with the publication number CN 2731203Y, titled "Silencing vibration-damping fore-runner normal open type solenoid valve".

Both of the solenoid valves include a solenoid coil component and a valve body component. The valve body component is provided with a valve port therein. A seal component is provided opposite to the valve port. A fixed iron core component is fixedly provided adjacent to the side of the seal component, and a movable iron core component is provided near the end of the fixed iron core component far from the seal component in the valve body. The seal component is fixedly connected to the movable iron core component. When the solenoid coil component is energized, the movable iron core component is moved towards the fixed iron core component under electromagnetic force, so as to drive the seal component to move towards the valve port and thus close the solenoid valve. When the solenoid coil component is de-energized, the movable iron core component is moved away from the fixed iron core component under return force of the spring, so as to drive the seal component to move away from the valve port and thus open the solenoid valve.

In above solenoid valves, the seal component is fixedly connected to the movable iron core component, which has a higher requirement on assembly and a more complexity in assembly process. Since the movable iron core component directly drives the seal component to operate, the seal component has a poor guiding performance and thus would shake in the inner cavity of the valve body component. Besides, the seal component is fixed to the transmission component by press-fitting or riveting during assembling. Thus, the deformation due to press-fitting or riveting may affect the uniformity of the seal component.

DE 27 40 646 A 1 relates to an electromagnetic safety valve with a valve seat that may be opened or closed with a closing element actuated by an electromagnet.

### SUMMARY OF THE INVENTION

The object of the present invention is to provide a novel normally open solenoid valve, which has a relatively simple assembly process. That is, during assembling, members and components are installed in sequence inside the inner cavity of valve body component, and are driven and fixed together with the structure of these members and components, without press-fitting or riveting the members and components inside the inner cavity of the valve body component. Therefore, the solenoid valve has a good guiding performance when being operated axially.
This object is achieved by the subject-matter of the independent claims. Further exemplary embodiments are evident from the dependent claims and the following description.

The present invention provides a normally open solenoid valve including a coil component and a valve body component in which a movable iron core component, a fixed iron core component, a transmission component and a seal member are provided, characterized in that a guiding member is provided at a side of the fixed iron core component opposite to the movable iron core component, the seal member is driven by the transmission component or the guiding member to operate, the seal member is axially movable, and the seal member is disposed or partially disposed within the guiding member.

The guiding member is provided with a step portion, i.e., the third step portion, to drive the seal member, the step portion is not formed by deformation of press-fitting or riveting, but formed integrally when being machined or formed.

The solenoid valve further comprises an upper valve seat, the upper valve seat is provided with a step portion and a guiding hole, and the guiding member comprises a first guiding portion engaged with an inner cavity of the valve body component and a second guiding portion engaged with the guiding hole of the upper valve seat.

The first guiding portion of the guiding member is larger than an intermediate portion of the guiding member to form a second step portion, and a return spring is provided between the second step portion of the guiding member and the step portion of the upper valve seat.

Preferably, the second guiding portion of the guiding member is located or partially located within the guiding hole of the upper valve seat when the solenoid valve is de-energized.

Preferably, an elastic element for sealing and buffering is provided between the transmission component and the seal member.

Preferably, the elastic element is a spiral spring.

Alternatively, the transmission component comprises a transmission rod and a transmission seat; one end of the transmission rod contacts with the movable iron core component, and the other end of the transmission component contacts with an upper planar surface of the transmission seat via a through hole in the center of the fixed iron core component.

Besides, the present invention further provides a manufacturing method for a solenoid valve comprising a coil component and a valve claimed in claim 1 **characterized in that** during assembling the valve body component, related machined members and components are cleaned and then installed in sequence, without using press-fitting process or riveting process when assembling the movable iron core component, the fixed iron core component, the transmission component, the seal member, the guiding member, and the return spring.

Alternatively, during assembling,
i. a sleeve forming an outer casing of the valve body component and the upper valve seat are firstly welded together,
ii. before, after or at the same time of the previous step, one end of the fixed iron core component to be positioned towards the movable iron core component is placed to face downwardly, and the member and the components such as the transmission component or the transmission seat of the transmission component, the seal member, the guiding member, and the return spring are installed in sequence to form a fixed iron core assembly;
iii. an assembly formed by welding the sleeve and the upper valve seat is installed to the fixed iron core assembly; after the fixed iron core assembly and the assembly formed by welding the sleeve and the upper valve seat are positioned properly, the fixed iron core component and the sleeve are fixed together by rolling and then welding, or by directly roll welding;
iv. then the movable iron core component and other members and components are installed.

The steps i and ii may be performed simultaneously or step 2 may be performed in advance or later.

Alternatively, the following steps may be employed during assembling,
i. firstly welding a sleeve of the valve body component and the upper valve seat together,
ii. sequentially installing the members and the components such as the return spring, the guiding member, the seal member, transmission component or the transmission seat of the transmission component, and the fixed iron core component into an inner cavity of the assembly formed by welding the sleeve and the upper valve seat;
iii. after the fixed iron core assembly and the assembly formed by welding the sleeve and the upper valve seat are positioned properly, fixing the fixed iron core component and the sleeve together by rolling and then welding, or by directly roll welding;
iv. then installing the movable iron core component and other members and components.

With the solenoid valve according to the present invention, the seal member has a better guiding performance when being axially moved due to the use of a guiding member. Moreover, there is no need of press-fitting or riveting for assembling the members and components in the inner cavity of the valve body component, which facilitates the assembly. Since the press-fitting or riveting are omitted during assembly, the consistency of the solenoid valve is improved, and the possibility of deformation or generation of scrap caused by press-fitting or riveting is eliminated.

### BRIEF DESCRIPTION of the DRAWINGS

Figure 1 is a schematic view of a first embodiment of a solenoid valve according to the invention;

Figure 1a is a partial schematic view showing a portion of a seal member and a guiding member of the solenoid valve shown in Fig. 1;

Figure 1b is a schematic view of the guiding member of the solenoid valve shown in Fig. 1;

Figure 2 is a schematic view of a second embodiment of a solenoid valve according to the invention;

Figure 3 is a schematic view of a third embodiment of a solenoid valve according to the invention;

Figure 4 is a schematic view of a fourth embodiment of a solenoid valve according to the invention;

Figure 5 is a schematic flow chart of the assembly process of the solenoid valve.

### DETAILED DESCRIPTION

The present invention may be applied to a normally open solenoid valve, such as a solenoid valve which is closed directly when being energized, or a solenoid valve which is closed indirectly by a pilot-operated means when being energized. The directly open/closed configuration is commonly used in a state that the required flowrate of the solenoid valve is relatively small, while the pilot-operated indirectly open/closed configuration is used in a state that the required flowrate of the solenoid valve is relatively large. In terms of the two configurations, the pilot-operated indirectly open/closed configuration is more complex, but the operating principles of both configurations are the same. Therefore, the following description will be made by way of the pilot-operated indirectly open/closed solenoid valve.

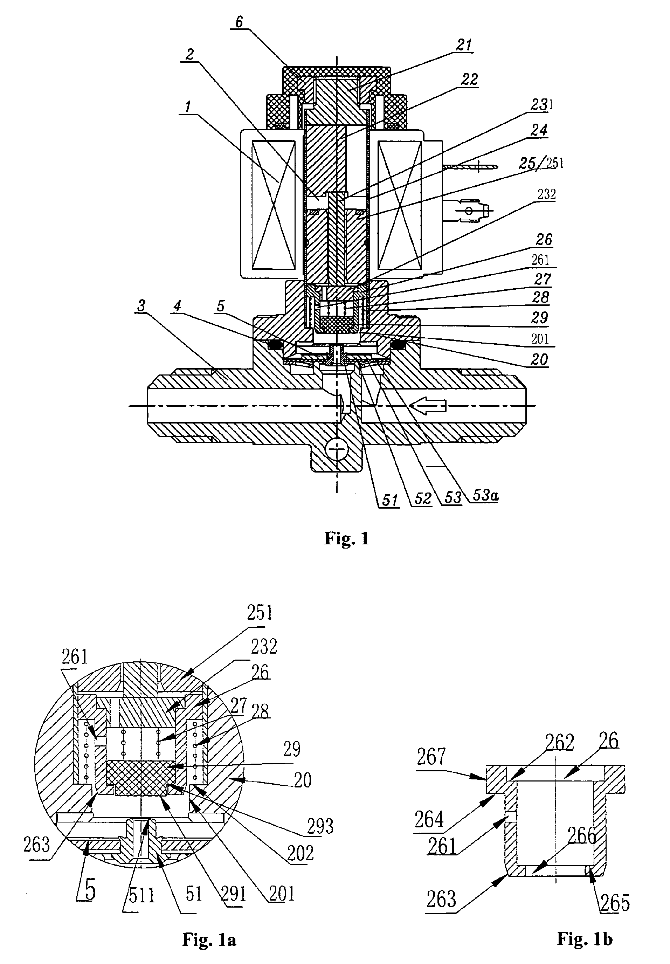

Fig. 1 is a schematic view of a first embodiment of a solenoid valve according to the invention, Fig. 1a is a partial schematic view showing a portion of a seal member and a guiding member of the solenoid valve shown in Fig. 1, and Fig. 1b is a schematic view of the guiding member of the solenoid valve shown in Fig. 1.

As shown in Figs. 1, 1a and 1b, the solenoid valve includes a valve body component 2, a lower valve body 3 and a solenoid coil component 1. The valve body component 2 includes a sleeve 24 and a plug 21. The sleeve 24 is hermetically fixed to an upper valve seat 20 by welding, forming an inner cavity. One end of the sleeve 24 is blocked with the plug 21. In the inner cavity formed by the sleeve 24 hermetically fixing to the upper valve seat 20 through welding, a movable iron core component 22 being movable axially under electromagnetic force is disposed at one end of the sleeve 24 adjacent to the plug 21. A fixed iron core component 25 is fixedly disposed in the sleeve 24 at the end of the movable iron core component 22 far from the plug 21. The fixed iron core component 25 and the sleeve 24 may be hermetically fixed by press-fitting process or doting fixing process and then welding, or be fixed hermetically directly by welding, or be fixed by rolling and then sealed by welding. The lower valve body 3 is disposed at an end of the valve body component 2 opposite to the plug 21, and the lower valve body 3 is hermetically connected with the valve body component 2. In this embodiment, the seal is achieved by a seal gasket 4. A valve port for opening/closing the seal is provided in the lower valve body 3. In this embodiment, the seal is achieved through the contact between a diaphragm 53 of a diaphragm component 5 and the valve port. The diaphragm component 5 is further provided with a pilot valve spool 51 and a stop plate 52. The pilot valve spool 51 is provided with a pilot valve port 511 hermetically contacted with a seal member 29. Because the present invention mainly involves the valve body component and the configuration of the lower valve body is not so closely relative to the present invention, detailed description of the lower valve body is omitted.

The fixed iron core component 25 comprises a fixed iron core 251, and optionally provided with a shading coil when the solenoid valve is supplied by an AC power supply. The fixed iron core 251 is provided with a through hole through which a transmission component passes for transmission. In this embodiment, the transmission component comprises a transmission rod 231 and a transmission seat 232. A portion of the transmission rod 231 is located within the through hole of the fixed iron core 251. The transmission seat 232 is located at the side of the fixed iron core 251 opposite to the movable iron core component 22, i.e., at the side of the fixed iron core 251 adjacent to the upper valve seat 20. One end of the transmission rod 231 abuts against the movable iron core component 22, and the other end thereof abuts against the upper planar surface of the transmission seat 232 via the through hole of the fixed iron core 251. The planar surface of the movable iron core component 22 for abutting against the one end of the transmission rod 231 may be an entire flat surface. Alternatively, that surface of the movable iron core component 22 may be provided with a recess to ensure the precision of positioning. As shown in Fig. 1, one end of the transmission rod 231 abuts against the bottom surface of the recess. The recess may have a depth substantially equal to or slightly greater than the travel distance of the movable iron core component 22 when being operated.

The upper valve seat 20 is provided with a step portion 202 for being in contact with a return spring 28 at a portion where the upper valve seat 20 faces the sleeve 24, and further has a guiding hole 201 for guiding. A guiding member 26 is provided between the fixed iron core 251 and the upper valve seat 20. The guiding member 26 has a first guiding portion 267 at the side thereof adjacent to the fixed iron core component and a second guiding portion 263 at the side thereof adjacent to the upper valve seat 20, respectively. An intermediate portion is located between the first guiding portion 267 and the second guiding portion 263. The guiding member may be further provided with a guiding balance hole for balancing the air flow/hydraulic pressure. In this embodiment, the guiding balance hole may be a balance hole 261 provided in the intermediate portion. Alternatively, the balance of pressure may be achieved by clearances naturally formed between the components. The first guiding portion 267 has an outer diameter greater than that of the intermediate portion, so as to form a second step portion 264. The return spring 28 is provided between the second step portion 264 and the step portion 202 of the upper valve seat 20, i.e., one end of the return spring 28 abuts against the step portion 202 of the upper valve seat 20, and the other end thereof abuts against the second step portion 264 of the guiding member 26. Moreover, the second guiding portion 263 of the guiding member 26 is located adjacent to the upper valve seat 20 side, and may be a guiding portion with a certain slope or chamfer corner. When the solenoid valve is de-energized, the second guiding portion 263 of the guiding member 26 is located within the guiding hole 201 of the upper valve seat 20, or the leading end of the second guiding portion 263 of the guiding member 26 is located within the guiding hole 201 of the upper valve seat 20 (i.e., the second guiding portion 263 of the guiding member 26 is partially located within the guiding hole 201 of the upper valve seat 20). The inner hole of the guiding member also comprises three portions. The upper portion of the inner hole has an inner diameter greater than that of the intermediate portion, so as to form a first step portion 262 abutting against the transmission seat 232. The lower portion of the inner hole adjacent to the second guiding portion 263 side has a third step portion 265 for placing a seal member and an opening 266 which may expose the seal surface 291 of the seal member 29. In this way, the step portion 293 of the seal member 29 contacts with the third step portion 265 of the guiding member, and the seal surface 291 of the seal member 29 may be in contact with the pilot valve port 511 of the pilot valve spool 51 to achieve seal. Besides, an elastic element, which is a buffer spring 27 in this embodiment, is provided between the seal member 29 and the transmission seat 232 within the inner hole of the guiding member. When the solenoid valve is energized to be closed, the spring force of the buffer spring 27 is smaller than that of the return spring at this time. More preferably, the spring force of the buffer spring 27 is about 1/3 to 1/10 of the spring force of the return spring at this time. Further, the seal member 29 may partially project out of the guiding member.

Further, in order to ensure pressure balance, the guiding hole 201 of the upper valve seat 20 may have an inner diameter slightly greater than that of the guiding member, so that it is possible to balance the pressure. Alternatively, an axial groove (not shown) may be provided in the inner wall of the guiding hole 201 of the upper valve seat 20 such that the groove serves as a pressure balancing passage for balancing both sides of the guiding hole of the upper valve seat 20. Similarly, a pressure balancing passage may also be provided between the transmission rod and the through hole of the fixed iron core and may be formed by making an inner diameter of the through hole of the fixed iron core component greater than the outer diameter of the transmission rod, or by providing an axial groove in the inner wall of the through hole of the fixed iron core , or by providing an axial groove in the transmission rod. Thus, there are associated pressure balancing passages between the upper valve seat and the movable iron core component 22 to maintain the pressure balance inside the valve.

Basically, the operating principle and operating condition of the solenoid valve will be described now.

When the solenoid coil component 1 is de-energized, there is no electromagnetic force between the movable iron core component and the fixed iron core component, and thus the guiding member 26 moves towards the fixed iron core (i.e., upward direction in figures) under spring force of the return spring 28 and sequentially drives the transmission seat 232 and the seal member, the transmission rod 231 and the movable iron core component 22, so as to move the movable iron core component 22 upwardly away from the fixed iron core 251 to close the plug under elastic force of the return spring, so that the movable iron core component 22 and the fixed iron core 251 are separated in a separated state. When there is no pressure difference between two ends of the solenoid valve, the diaphragm component 5 contacts with the valve port under its own weight, thus the solenoid valve is in a closed state.

At this time, when air/liquid is introduced from the inlet of the solenoid valve, the pressure at the inlet is higher than the pressure at the outlet, i.e., higher than the pressure in the cavity above the diaphragm component 5 communicated with the outlet. Thus, a pressure difference is formed between the upper and lower sides of the diaphragm component 5. Under this pressure difference, the diaphragm component 5 is moved upwardly and is stopped by the stop plate 52 and the upper valve seat 20. Thus, the seal member 29 is separated from the pilot valve port 511 of the pilot valve spool 51, and the valve port is in an open state. To decrease the impact force generated when the diaphragm is opened and closed and ensure the life span of the diaphragm, the diaphragm is provided with a diaphragm balance hole 53a which has a diameter smaller than that of the pilot valve port 511 of the pilot valve spool 51.

When the solenoid coil component 1 is energized, the electromagnetic force is greater than the spring force of the return spring 28. Under the electromagnetic force, the movable iron core component 22 is moved towards the fixed iron core 251 and sequentially drives the transmission rod 231, the transmission seat 232, the guiding member 26 which are the transmission parts, and the seal member 29 as the seal component together to move towards the pilot valve port 511 of the pilot valve spool 51, until the seal member 29 contacts with the pilot valve port 511 of the pilot valve spool 51. Then, the movable iron core component 22 keeps moving towards the fixed iron core 251, while the seal member 29 is not moved anymore, and thus the buffer spring 27 is compressed. At this time, by the diaphragm balance hole 53a provided in the diaphragm component 53, the pressure at the upper and lower sides of the diaphragm component 53 tends to be balanced. The diaphragm component 53 is moved downwardly to close the valve port under the electromagnetic force of the movable iron core component 22 and the fixed iron core 251. At the beginning, the displacement of the seal member is equal to that of the movable iron core component 22 until the seal surface of the seal member gets into contact with the pilot valve port 511 of the pilot valve spool 51. Then the movable iron core component 22 is kept moving for a certain distance, e.g., 0.1 to 1mm, while the seal member 29 is stopped by abutting against the pilot valve port 511 of the pilot valve spool 51. Thus the buffer spring 27 is compressed, and the spring force thereof maintains the contact between the seal member and the pilot valve port 511 of the pilot valve spool 51 so as to achieve the seal the valve port. At this moment, a gap exists between the bottom surface of the seal member 29 and the third step portion 265 of the guiding member 26. That is, the seal member 29 is disposed to be axially movable inside the guiding member 26.

When the solenoid valve is switched from being energized to being de-energized, the electromagnetic force between the movable iron core component 22 and the fixed iron core component 25 disappears, and the movable iron core component 22 is moved away from the fixed iron core component under spring force of the return spring 28. At the beginning, the seal member 29 does not move until the bottom surface of the seal member 29 gets into contact with the third step portion 265 of the guiding member 26 after the movable iron core component 22 moves for a certain distance. Then, the guiding member 26 drives the seal member 29 to move upwardly. At this moment, the spring force of the return spring 28 overcomes the force generated by the pressure difference at the pilot valve port 511 of the pilot valve spool 51, thereby opening the pilot valve port 511 of the pilot valve spool 51. In this way, the pressure at the upper side of the diaphragm component 5 is decreased, thus a pressure difference is formed between the upper and lower sides of the diaphragm component 5. Under the pressure difference, the diaphragm component 5 is moved upwardly, thereby opening the valve port of the lower valve body 3. If there is no pressure difference between the two ends of the solenoid valve or the pressure difference is smaller than 0.005MPa, the diaphragm component contacts with the valve port under its own weight, so that the solenoid valve is in a closed state. If air/liquid is introduced from the inlet of the solenoid valve, the pressure at the inlet is higher than the pressure at the outlet, i.e., higher than the pressure in the cavity above the diaphragm component 5 communicated with the outlet, and thus a pressure difference is formed between the upper and lower sides of the diaphragm component 5. When the force generated by this pressure difference is equal to or greater than the own weight of the diaphragm component, the diaphragm component 5 is moved upwardly and stopped by the stop plate 52 and the upper valve seat 20. At this time, the seal member 29 is separated from the pilot valve port 511 of the pilot valve spool 51, and the main valve port is in an open state. Thus the solenoid valve may be normally open and may be closed when being energized.

During assembling this valve body component, provided that related members and components have been machined and these machined members and components are cleaned, those members and components are installed in the inner cavity of the valve body component in sequence and achieve transmission operation by their own configuration. That is, when assembling, the members and components such as the movable iron core component, the fixed iron core component, the transmission component, the seal member, the guiding member, the return spring and the buffer spring are assembled into the inner cavity of the valve body component without using press-fitting process or riveting process.

One assembly method is as follows:
**i.** firstly machining and cleaning each of the members and components;
**ii.** welling the sleeve of the valve body component and the upper valve seat together;
**iii.** before, after or at the same time when the sleeve of the valve body component and the upper valve seat are welded together, placing one end of the fixed iron core component to be positioned towards the movable iron core component to face downwardly, and then sequentially installing the members and components such as the transmission seat of the transmission component, the buffer spring, the seal member, the guiding member, the return spring to form a fixed iron core assembly. That is, this step iii and step ii described above may be performed simultaneously, or this step iii may be performed in advance or later;
**iv.** installing the assembly formed by welding the sleeve and the upper valve seat to the fixed iron core assembly, or installing the assembled fixed iron core assembly to the assembly formed by welding the sleeve and the upper valve seat;
**v.** after the fixed iron core assembly and the assembly formed by welding the sleeve and the upper valve seat are positioned properly, fixing the fix iron core component and the sleeve together by rolling and then welding, or by directly roll welding;
**vi.** installing the transmission rod and the movable iron core component into the sleeve; and then installing, positioning and fixing the plug 21 by welding.

Another assembly method is as follows:
**i.** firstly machining and cleaning each of the members and components;
**ii.** welling the sleeve of the valve body component and the upper valve seat together;
**iii.** after the sleeve of the valve body component and the upper valve seat are welded together, sequentially installing the members and components such as the return spring, the guiding member, the seal member, the buffer spring, the transmission seat, the fixed iron core component into an inner cavity of the assembly formed by welding the sleeve and the upper valve seat;
**iv.** after the fixed iron core component and the assembly formed by welding the sleeve and the upper valve seat are positioned properly, fixing the fixed iron core component and the sleeve together by rolling and then welding, or by directly roll welding;
**v.** installing the transmission rod and the movable iron core component into the sleeve; and then installing, positioning and fixing the plug 21 by welding.

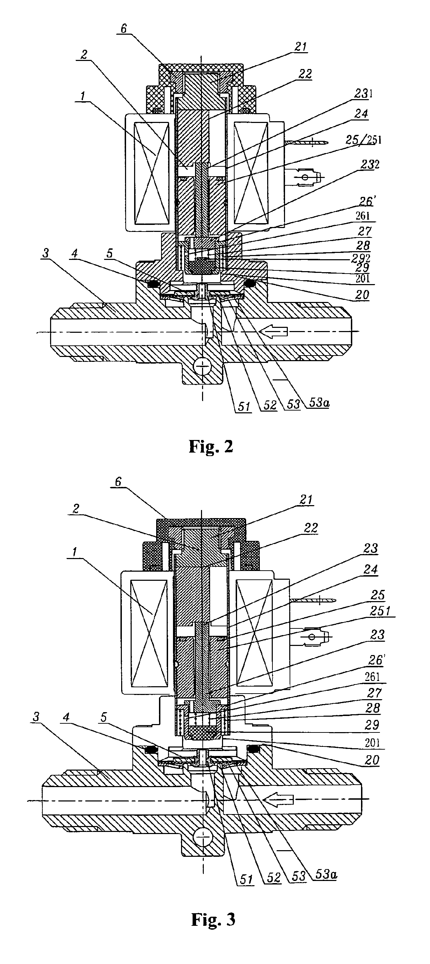

Hereinafter another embodiment will be described. Figure 2 is a schematic view of a second embodiment of a solenoid valve according to this invention. As shown in Fig. 2, this embodiment is an improvement based on the first embodiment. In order to further ensure the positioning of the buffer spring, a protrusion 292 is provided on the side of the seal member facing the transmission seat. Moreover, in order to improve the machining consistency of the guiding member and reduce the machining processes, the guiding member is formed by punching process. In this way, the guiding member 26' has a planar surface on its upper portion. The transmission seat 232 contacts with the upper planar surface of the guiding member 26'. The first step portion in the first embodiment is omitted. Compared with the guiding member in the first embodiment, the material consumption and machining processes for the guiding member may be reduced, and the consistency for the guiding member will be better due to punching process. The detailed assembly method, operating principle and operating mode are the same as that of the first embodiment and would not be described herein.

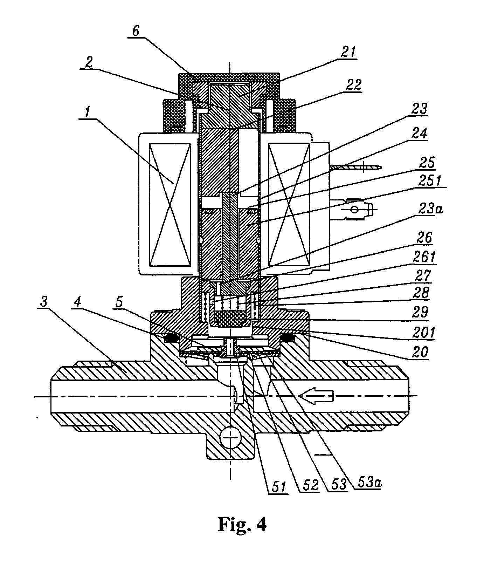

Hereinafter two additional embodiments will be described. Figure 3 is a schematic view of a third embodiment of a solenoid valve according to this invention, and Figure 4 is a schematic view of a fourth embodiment of a solenoid valve according to this invention. These two embodiments are differed with each other in that different guiding members are used. The guiding member 26' in Figure 3 is formed by punching process, while the guiding member 26 in Figure 4 is formed by machining process, and of course, may be formed by punching process.

As shown in Figs. 3 and 4, these two embodiments are also improvements based on the first embodiment. In these embodiments, besides the difference in guiding members, the transmission rod and transmission seat in the previous embodiments are machined as a single piece, and specifically as a transmission component 23. Thus, the number of the members and components is reduced. Other configurations of these embodiments are the same as the embodiments described above.

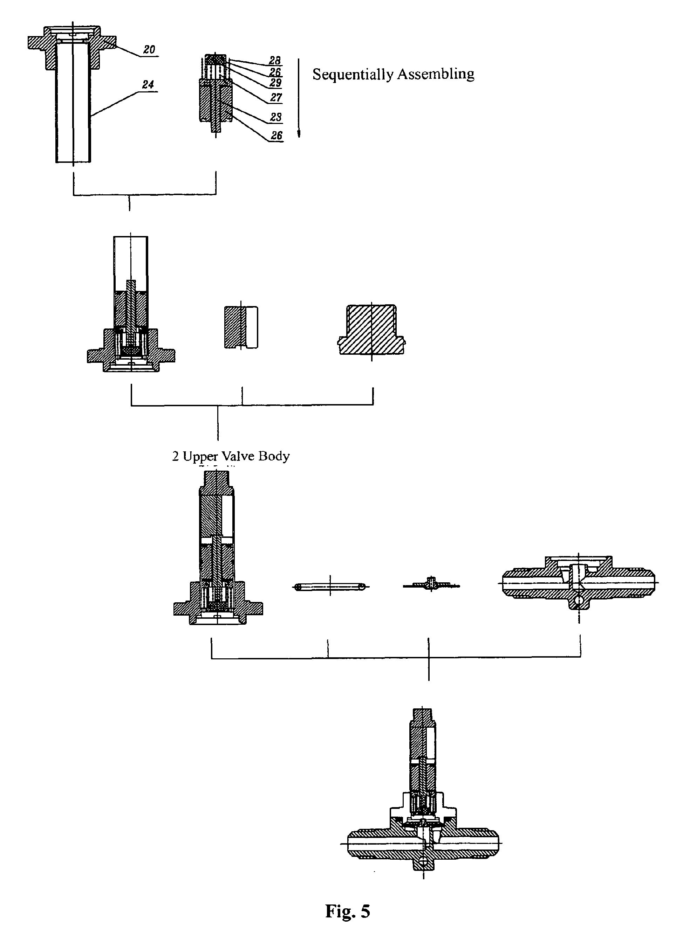

As shown in Figure 5, the following assembly method may be employed:
**i.** firstly machining and cleaning each of the members and components;
**ii.** welding the sleeve 24 of the valve body component and the upper valve seat 20 together;
**iii.** before, after or at the same time when the sleeve 24 of the valve body component and the upper valve seat 20 are welded together, placing one end of the fixed iron core component 25 to be positioned towards the movable iron core component 22 to face downwardly, and then sequentially installing the members and components such as the transmission component 23, the buffer spring 27, the seal member 29, the guiding member 26', the return spring 28 to form a fixed iron core assembly. That is, the step iii and step ii may be performed simultaneously, or the step iii may be performed in advance or later;
**iv.** then installing the assembly formed by welding the sleeve and the upper valve seat to the fixed iron core assembly, or installing the assembled fixed iron core assembly to the assembly formed by welding the sleeve and the upper valve seat;
**v.** after the fixed iron core assembly and the assembly formed by welding the sleeve and the upper valve seat are positioned properly, fixing the fixed iron core component and the sleeve together by rolling and then welding, or by directly roll welding or by other positioning and fixing means;
**vi.** installing the movable iron core component 22 into the sleeve; and then installing and positioning the plug 21 to ensure the travel distance of the movable iron core component 22 when be operated and fixing the plug 21 by welding.

Another assembly method is as follows:
**i.** firstly machining and cleaning each of the members and components;
**ii.** welding the sleeve 24 of the valve body component and the upper valve seat 20 together;
**iii.** after the sleeve 24 of the valve body component and the upper valve seat 20 are welded together, sequentially installing the members and components such as the return spring 28, the guiding member 26', the seal member 29, the buffer spring 27, the transmission component, the fixed iron core component into an inner cavity of the assembly formed by welding the sleeve 24 and the upper valve seat 20;
**iv.** after the fixed iron core component 25 and the assembly formed by welding the sleeve 24 and the upper valve seat 20 are positioned properly, fixing the fixed iron core component and the sleeve together by rolling and then welding, or by directly roll welding or by other fixing means;
**v.** installing the movable iron core component 22 into the sleeve; and then installing and positioning the plug 21 to ensure the travel distance of the movable iron core component 22 when being operated, and fixing the plug 21 by welding.

The other configurations, operating principle and operating mode are the same as that of the above-described first embodiment and would not be described herein.

In the embodiments described above, the solenoid valves are pilot valves. However, the present invention is not limited thereto. In the case that the required flowrate for the solenoid valve is relatively small, it is unnecessary to adopt a pilot solenoid valve and a directly open/closed solenoid valve may be applicable in which the seal member of the solenoid valve is operated to directly open/close the main valve port of the solenoid valve. The corresponding operating principle and operating mode of the directly open/closed solenoid valve are simpler and thus will not be described therein again. Further, the terms "up", "upwardly", "upper" and "down", "downwardly", "lower" in the above description are only for illustration with reference to the drawings or assembling sequence and do not intended to limit this invention.

The above description only describes the preferable embodiments of the present invention. It should be noted that many improvements and modifications may be made by those skilled in the art without departing from the principle of this invention. These improvements and modifications should be deemed to fall into the protection scope of this invention as defined by the appended claims.

## Claims

1. A normally open solenoid valve, comprising a coil component (1) and a valve body component (2) in which a movable iron core component (22), a fixed iron core component (25), a transmission component (231, 232) and a seal member (29) are provided, a guiding member (26) being provided at a side of the fixed iron core component (25) opposite to the movable iron core component (22), the seal member (29)being driven by the transmission component (231) or the guiding member (26) to operate, the seal member (29)being axially movable, and the seal member (29)being disposed or partially disposed within the guiding member (26),
wherein the valve body component (2) comprises a sleeve (24) and a plug (21), the sleeve (24) is hermetically fixed to an upper valve seat (20), the guiding member (26) is provided with a step portion (265) to drive the seal member (29), the step portion (265) is not formed by deformation of press-fitting or riveting, and the seal member (29) is provided with a step portion (293) matched with the step portion (265) of the guiding member (26),wherein the upper valve seat (20) is provided with a step portion (202) and a guiding hole (201), **characterized in that**
the guiding member (26) comprises a first guiding portion (267) engaged with an inner cavity of the valve body component (2) and a second guiding portion (263) engaged with the guiding hole (201) of the upper valve seat (20),the first guiding portion (267) of the guiding member (26) is larger than an intermediate portion of the guiding member (26) to form a second step portion (264), and a return spring (28) is provided between the second step portion (264) of the guiding member (26) and the step portion (202) of the upper valve seat (20).

2. The solenoid valve according to claim 1, wherein the second guiding portion (263) of the guiding member (26) is located or partially located within the guiding hole (201) of the upper valve seat (20) when the solenoid valve is de-energized.

3. The solenoid valve according to claim 1 or 2, wherein an elastic element (27) for sealing and buffering is provided between the transmission component (231) and the seal member (29).

4. The solenoid valve according to claim 3, wherein the elastic element is a spiral spring (27).

5. The solenoid valve according to claim 1 or 2, wherein the transmission component comprises a transmission rod (231) and a transmission seat (232); one end of the transmission rod (231) contacts with the movable iron core component (22), and the other end of the transmission component contacts with an upper planar surface of the transmission seat (232) via a through hole in the center of the fixed iron core component (25).

6. A manufacturing method for the solenoid valve claimed in claim 1, **characterized in that**
during assembling the valve body component (2), related machined members and components are cleaned and then installed in sequence, without using press-fitting process or riveting process when assembling the movable iron core component (22), the fixed iron core component (25), the transmission component (231, 232), the seal member (29), the guiding member (26), and the return spring (28).

7. The manufacturing method for a solenoid valve according to claim 6, wherein the method comprises the following steps:
firstly welding the sleeve (24) of the valve body component (2) and the valve seat (20) together;
placing one end of the fixed iron core component (25) to be positioned towards the movable iron core component (22) to face downwardly, and then sequentially installing the members and components such as the transmission component (231, 232) or a transmission seat (232) of the transmission component, the seal member (29), the guiding member (26) and the return spring (28) to form a fixed iron core assembly; this step and the previous step can be performed simultaneously, or this step can be performed before or after the previous step;
then installing an assembly formed by welding the sleeve (24) and the upper valve seat (20) to the fixed iron core assembly;
after the fixed iron core assembly and the assembly formed by welding the sleeve (24) and the upper valve seat (20) are positioned properly, fixing the fixed iron core component (25) and the sleeve (24) together by rolling and then welding, or by directly roll welding; and
finally installing the movable iron core component (22) and other members and components.

8. The manufacturing method for a solenoid valve according to claim 6, wherein the method comprises the following steps:
firstly forming an assembly by welding a sleeve (24) of the valve body component (2) and the upper valve seat (20) together,
sequentially installing the members and components such as the return spring (28), the guiding member (26), the seal member (29), transmission component (231, 232) or a transmission seat (232) of the transmission component, and the fixed iron core component (25) into an inner cavity of the assembly formed by welding the sleeve (24) and the upper valve seat (20);
after a fixed iron core assembly and the assembly formed by welding the sleeve (24) and the upper valve seat (20) are positioned properly, fixing the fixed iron core component (25) and the sleeve (24) together by rolling and then welding, or by directly roll welding; and
finally, installing the movable iron core component (22) and other members and components.

## Patentansprüche

1. Normaloffenes Magnetventil, das ein Spulenbauteil (1) und ein Ventilgehäusebauteil (2), in dem ein bewegliches Eisenkernbauteil (22), ein unbewegliches Eisenkernbauteil (25), ein Übertragungsbauteil (231, 232) und ein Dichtungselement (29) bereitgestellt werden, umfasst, wobei ein Führungselement (26) an einer dem beweglichen Eisenkernbauteil (22) gegenüberliegenden Seite des unbeweglichen Eisenkernbauteils (25) bereitgestellt wird, das Dichtungselement (29) durch das Übertragungsbauteil (231) oder das Führungselement (26) angetrieben wird, um zu arbeiten, das Dichtungselement (29) in Axialrichtung bewegt werden kann und das Dichtungselement (29) ganz oder teilweise innerhalb des Führungselements (26) angeordnet ist,
wobei das Ventilgehäusebauteil (2) eine Hülse (24) und einen Stopfen (21) umfasst, die Hülse (24) hermetisch an einem oberen Ventilsitz (20) befestigt ist, das Führungselement (26) mit einem Stufenabschnitt (265) versehen ist, um das Dichtungselement (29) anzutreiben, der Stufenabschnitt (265) nicht durch Verformung mittels Pressfitting oder Nieten geformt ist und das Dichtungselement (29) mit einem Stufenabschnitt (293) versehen ist, der mit dem Stufenabschnitt (265) des Führungselements (26) zusammengepasst ist, wobei der obere Ventilsitz (20) mit einem Stufenabschnitt (202) und einem Führungsloch (201) versehen ist, **dadurch gekennzeichnet, dass**
das Führungselement (26) einen ersten Führungsabschnitt (267), der in Eingriff mit einem inneren Hohlraum des Ventilgehäusebauteils (2) gebracht ist, und einen zweiten Führungsabschnitt (263), der in Eingriff mit dem Führungsloch (201) des oberen Ventilsitzes (20) gebracht ist, umfasst, der erste Führungsabschnitt (267) des Führungselements (26) größer ist als ein Zwischenabschnitt des Führungselements (26), um einen zweiten Stufenabschnitt (264) zu bilden, und eine Rückstellfeder (28) zwischen dem zweiten Stufenabschnitt (264) des Führungselements (26) und dem Stufenabschnitt (202) des oberen Ventilsitzes (20) bereitgestellt wird.

2. Magnetventil nach Anspruch 1, wobei der zweite Führungsabschnitt (263) des Führungselements (26) vollständig oder teilweise innerhalb des Führungslochs (201) des oberen Ventilsitzes (20) angeordnet ist, wenn das Magnetventil energielos gemacht wird.

3. Magnetventil nach Anspruch 1 oder 2, wobei ein elastisches Element (27) zum Abdichten und Puffern zwischen dem Übertragungsbauteil (231) und dem Dichtungselement (29) bereitgestellt wird.

4. Magnetventil nach Anspruch 3, wobei das elastische Element eine Spiralfeder (27) ist.

5. Magnetventil nach Anspruch 1 oder 2, wobei das Übertragungsbauteil eine Übertragungsstange (231) und einen Übertragungssitz (232) umfasst, wobei das eine Ende der Übertragungsstange (231) Kontakt mit dem beweglichen Eisenkernbauteil (22) herstellt und das andere Ende des Übertragungsbauteils über ein Durchgangsloch in der Mitte des unbeweglichen Eisenkernbauteils (25) Kontakt mit einer oberen ebenen Fläche des Übertragungssitzes (232) herstellt.

6. Herstellungsverfahren für das Magnetventil nach Anspruch 1, **dadurch gekennzeichnet, dass**:
während des Zusammenbauens des Ventilgehäusebauteils (2) zugehörige gespante Elemente und Bauteile gereinigt und dann der Reihe nach installiert werden, ohne ein Pressfitting-Verfahren oder ein Nietverfahren anzuwenden, wenn das bewegliche Eisenkernbauteil (22), das unbewegliche Eisenkernbauteil (25), das Übertragungsbauteil (231, 232), das Dichtungselement (29), das Führungselement (26) und die Rückstellfeder (28) zusammengebaut werden.

7. Herstellungsverfahren für das Magnetventil nach Anspruch 6, wobei das Verfahren die folgenden Schritte umfasst:
zuerst das Zusammenschweißen der Hülse (24) des Ventilgehäusebauteils (2) und des Ventilsitzes (20),
das Platzieren des einen Endes des unbeweglichen Eisenkernbauteils (25), das zu dem beweglichen Eisenkernbauteil (22) hin anzuordnen ist, so dass es nach unten zeigt, und danach der Reihe nach das Installieren der Elemente und Bauteile wie beispielsweise des Übertragungsbauteils (231, 232) oder eines Übertragungssitzes (232) des Übertragungsbauteils, des Dichtungselements (29), des Führungselements (26) und der Rückstellfeder (28), um eine unbewegliche Eisenkernbaugruppe zu bilden, wobei dieser Schritt und der vorhergehende Schritt gleichzeitig ausgeführt werden können oder dieser Schritt vor oder nach dem vorhergehenden Schritt ausgeführt werden kann,
danach das Installieren einer durch das Schweißen der Hülse (24) und des oberen Ventilsitzes (20) gebildeten Baugruppe an die unbewegliche Eisenkernbaugruppe,
nachdem die unbewegliche Eisenkernbaugruppe und die durch das Schweißen der Hülse (24) und des oberen Ventilsitzes (20) gebildete Baugruppe richtig angeordnet sind, das Befestigen des unbeweglichen Eisenkernbauteils (25) und der Hülse (24) aneinander durch Walzen und danach Schweißen oder durch unmittelbares Walzschweißen, und
schließlich das Installieren des beweglichen Eisenkernbauteils (22) und der anderen Elemente und Bauteile.

8. Herstellungsverfahren für das Magnetventil nach Anspruch 6, wobei das Verfahren die folgenden Schritte umfasst:
zuerst das Bilden einer Baugruppe durch das ZusammenSchweißen der Hülse (24) des Ventilgehäusebauteils (2) und des Ventilsitzes (20),
der Reihe nach das Installieren der Elemente und Bauteile wie beispielsweise der Rückstellfeder (28), des Führungselements (26), des Dichtungselements (29), des Übertragungsbauteils (231, 232) oder eines Übertragungssitzes (232) des Übertragungsbauteils und des unbeweglichen Eisenkernbauteils (25) in einem Hohlraum der durch das Schweißen der Hülse (24) und des oberen Ventilsitzes (20) gebildeten Baugruppe,
nachdem eine unbewegliche Eisenkernbaugruppe und die durch das Schweißen der Hülse (24) und des oberen Ventilsitzes (20) gebildete Baugruppe richtig angeordnet sind, das Befestigen des unbeweglichen Eisenkernbauteils (25) und der Hülse (24) aneinander durch Walzen und danach Schweißen oder durch unmittelbares Walzschweißen, und
schließlich das Installieren des beweglichen Eisenkernbauteils (22) und der anderen Elemente und Bauteile.

## Revendications

1. Electrovanne normalement ouverte, comprenant un composant de bobine (1) et un composant de corps de soupape (2) dans lequel un composant de noyau de fer mobile (22), un composant de noyau de fer fixe (25), un composant de transmission (231, 232) et un élément d'étanchéité (29) sont agencés, un élément de guindage (26) agencé sur un côté du composant de noyau de fer fixe (25) opposé au composant de noyau de fer mobile (22), l'élément d'étanchéité (29) étant entraîné par le composant de transmission (231) ou l'élément de guidage (26) pour fonctionner, l'élément d'étanchéité (29) étant mobile axialement, et l'élément d'étanchéité (29) étant disposé ou partiellement disposé à l'intérieur de l'élément de guidage (26),
dans laquelle le composant de corps de soupape (2) comporte un manchon (24) et un bouchon (21), le manchon (24) est hermétiquement fixé à un siège de soupape supérieur (20), l'élément de guidage (26) est muni d'une partie étagée (265) pour entraîner l'élément d'étanchéité (29), la partie étagée (265) n'est pas formée par déformation d'ajustement par pression ou rivetage, et l'élément d'étanchéité (29) est muni d'une partie étagée (293) ajustée à la partie étagée (265) de l'élément de guidage (26), le siège de soupape supérieur (20) étant muni d'une partie étagée (202) et d'un trou de guidage (201), **caractérisée en ce que**
l'élément de guidage (26) comporte une première partie de guidage (267) mise en prise avec une cavité intérieure du composant de corps de soupape (2) et une seconde de guidage (263) mise en prise avec le trou de guidage (201) du siège de soupape supérieur (20), la première partie de guidage (267) de l'élément de guidage (26) est plus grande qu'une partie intermédiaire de l'élément de guidage (26) afin de former une seconde partie étagés (264), et un ressort de rappel (23) est agencé entre la seconde partie étagée (264) de l'élément de guidage (26) et la partie étagés (202) du siège de soupape supérieur (20).

2. Electrovanne selon la revendication 1, dans laquelle la seconde partie de guidage (263) de l'élément de guidage (26) est située ou partiellement située dans le trou de guidage (201) du siège de soupape supérieur (20) lorsque l'électrovanne n'est pas sous tension.

3. Electrovanne selon la revendication 1 ou 2, dans laquelle un élément élastique (27) pour l'étanchéité et la protection est agencé entre l'élément de transmission (231) et l'élément d'étanchéité (29).

4. Electrovanne selon la revendication 3, dans lequel l'élément élastique est un ressort en spirale (27).

5. Electrovanne selon la revendication 1 ou 2, dans lequel le composant de transmission comprend une tige de transmission (231) et un siège de transmission (232), une extrémité de la tige de transmission (231) est en contact avec le composant de noyau de fer mobile (22), et l'autre extrémité du composant de transmission est en contact avec une surface supérieure plane du siège de transmission (232) par l'intermédiaire d'un trou traversant au centre du composant de noyau de fer fixe (25).

6. Procédé de fabrication d'une électrovanne selon la revendication 1, **caractérisé en ce que**
lors du montage du composant de corps de soupape (2), des éléments et des composants usinés associés sont nettoyés et installés ensuite l'un après l'autre, sans utiliser de processus d'ajustement par pression ou de processus de rivetage lors du montage du composant de noyau de fer mobile (22), du composant de noyau de fer fixe (25) du composant de transmission (231, 232), de l'élément d'étanchéité (29), de l'élément de guidage (26) et du ressort de rappel (28).

7. Procédé de fabrication d'une électrovanne selon la revendication 6, dans lequel le procédé comprend les étapes suivantes consistant à :
tout d'abord souder ensemble le manchon (24) du composant de corps de soupape (2) et le siège de soupape (20),
placer une extrémité du composant de noyau de fer fixe (25) à positionner vers le composant de noyau de fer mobile (22) afin qu'elle soit orientée vers le bas, et installer ensuite séquentiellement les éléments et les composants tels que le composant de transmission (231, 232) ou un siège de transmission (232) du composant de transmission, l'élément d'étanchéité (29), l'élément de guidage (26) et le ressort de rappel (28) afin de former un ensemble de noyau de fer fixe ; cette étape et l'étape précédente peuvent être exécutées simultanément, ou cette étape peut être exécutée avant ou après l'étape précédente,
installer ensuite un ensemble formé en soudant le manchon (24) et le siège de soupape supérieur (20) à l'ensemble de noyau de fer fixe,
une fois que l'ensemble de noyau de fer fixe et l'ensemble formé en soudant le manchon (24) et le siège de soupape supérieur (20) sont correctement positionnés, fixer le composant de noyau de fer fixe (25) et le manchon (24) ensemble par laminage et ensuite par soudure, ou directement par soudure en continu, et
enfin, installer le composant de noyau de fer mobile (22) et les autres éléments et composants.

8. Procédé de fabrication d'une électrovanne selon la revendication 6, dans laquelle le procédé comporte les étapes suivantes consistant à :
former tout d'abord un ensemble en soudant un manchon (24) du composant de corps de soupape (2) et le siège de soupape supérieur (20) l'un avec l'autre,
installer séquentiellement les éléments et les composants tels que le ressort de rappel (28), l'élément de guidage (26), l'élément d'étanchéité (29), le composant de transmission (231, 232) ou un siège de transmission (232) du composant de transmission, et le composant de noyau de fer fixe (25) dans une cavité intérieure de l'ensemble formé en soudant le manchon (24) et le siège de soupape supérieur (20),
une fois que l'ensemble de noyau de fer fixe et l'ensemble formé en soudant le manchon (24) et le siège de soupape supérieur (20) sont correctement positionnés, fixer ensemble le composant de noyau de fer fixe (25) et le manchon (24) par laminage et ensuite par soudure, ou par soudure directement en continu, et
enfin, installer le composant de noyau de fer mobile (22) et les autres éléments et composants.
